# EUROPEAN PATENT APPLICATION

(11) **EP 4 701 333 A1**
(43) Date of publication of application: **25.02.2026**
(21) Application number: 25196935.8
(22) Date of filing: 20.08.2025
(51) Int. Cl.: H05B 1/02

(54) **SYSTEMS AND METHODS FOR A VIRTUAL ELECTRIC HEAT TRACE CONTROLLER**

(30) Priority: 20.08.2024 US 202463685085 P
(71) Applicant: nVENT SERVICES GMBH, 8200 Schaffhausen (CH)
(72) Inventor: Begg, Robert, Alberta (CA); Manderscheid, Rolf, Alberta (CA); van der Goot, Roel, Alberta (CA)
(74) Representative: Barker Brettell LLP

(57) **Abstract**

An electric heat trace (EHT) control system (10) and corresponding methods are provided. The system comprises a heat trace cable (14) to heat a surface, a sensor (16) that outputs a status value, and an EHT controller (18) in communication with the heat trace cable and the sensor. The EHT controller receives the status value from the sensor, compares the status value to a first threshold, and outputs the status value and a first alarm flag when the status value meets the first threshold. The system further comprises a gateway in communication with the EHT controller. The gateway (22) receives the output status value and the first alarm flag when output from the EHT controller, compares the status value to a second threshold, and communicates a second alarm flag to a management system in communication with the gateway when the status value meets the second threshold.

## Description

### CROSS REFERENCE TO RELATED APPLICATIONS

This application claims priority to U.S. Provisional Application No. 63/685,085, filed on August 20, 2024, the contents of which is incorporated by reference herein in its entirety.

### BACKGROUND

Heat trace solutions utilize electric heating elements, such as electric heat trace cables, to apply heat to an external surface. Such heat trace solutions may be used to keep critical processes operational, protect pipes and equipment from freezing, keep the flow in transfer lines, and provide winter safety and comfort heating in buildings and homes. Example heat trace applications can include, but are not limited to: temperature maintenance (e.g., to ensure a specialized hot water supply to keep fluids and liquids at desired temperature levels and/or protect critical safety lines); industrial tank insulation systems (e.g., to keep stored liquids at a constant temperature); industrial, commercial, and residential surface snow melting; roof and gutter deicing; fire-rated wiring (e.g., to protect critical electrical circuits during a fire or other emergency); process temperature maintenance (e.g., ensuring fluid temperature maintenance with industrial process heating equipment); pipe freeze protection; offshore and maritime anti-icing and de-icing; industrial, commercial, and residential flow maintenance (e.g., maintaining the temperature of fluids in pipes to ensure continuous flow); long pipeline heating; rail heating; and frost heave protection.

Looking to one particular example, piping systems are often used to transport a liquid and/or gas product, such as a petroleum product, over large distances, such as from an extraction point to a processing facility. If the extraction location and/or the processing facility are located in a cold weather environment, it may be necessary to provide heat trace cables to maintain the pipe at a desired temperature to prevent the fluid product from freezing, or in temperature sensitive operations, to maintain a temperature that allows for an efficient flow of the fluid product.

One or more electric heat trace cables, along with any associated components, can be known as an electric heating trace (EHT) circuit. Furthermore, each EHT circuit is monitored and controlled by a heat trace controller. Heat trace controllers can have multiple functionalities and, often, certain applications contain multiple EHT circuits with multiple respective EHT controllers. While some EHT controllers can be provided with updated functionality via firmware updates, this can be a time-consuming task for applications with many EHT controllers and, based on the age of the EHT controller, may not always be feasible. Therefore, there is a need for the ability to easily add new functionality and lengthen the life of EHT controllers to improve application outcomes.

### SUMMARY

In some embodiments, an electric heat trace (EHT) control system for heating a surface is provided. The EHT control system comprises a heat trace cable to heat the surface, a sensor that outputs a status value, and an EHT controller in communication with the heat trace cable and the sensor. The EHT controller receives the status value from the sensor, compares the status value to a first threshold, and outputs the status value and a first alarm flag when the status value meets the first threshold. The EHT control system further comprises a gateway in communication with the EHT controller to receive the output status value and the first alarm flag when output from the EHT controller, compare the status value to a second threshold, and communicate a second alarm flag to a management system in communication with the gateway when the status value meets the second threshold.

In some embodiments, a gateway for an electric heat trace (EHT) control system is provided. The gateway comprises a processor and a memory storing instructions that, when executed by the processor, cause the gateway to set a first threshold, receive status values from an EHT controller, receive a first alarm flag from the EHT controller when the status values meet a second threshold set by the EHT controller, compare the status values to the first threshold, and output a second alarm flag to a management system when the status values meet the first threshold.

In some embodiments, a method of operating an electric heat trace (EHT) control system for heating a surface is provided. The method includes receiving, at an EHT controller, a status value from a sensor, comparing, using the EHT controller, the status value to a first threshold, and outputting, using the EHT controller, the status value and a first alarm flag to a gateway when the status value meets the first threshold. The method further includes receiving, at the gateway, the output status value and the first alarm flag from the EHT controller, comparing, by the gateway, the output status value to a second threshold, and selectively communicating, by the gateway, a second alarm flag to a management system when the status value meets the second threshold.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the control system, gateway or any feature(s) or component(s) described may have corresponding features definable and/or combinable with respect to a method or vice versa, and these embodiments are specifically envisaged.

### DESCRIPTION OF THE DRAWINGS

The accompanying drawings, which are incorporated in and form a part of this specification, illustrate embodiments of the invention and, together with the description, serve to explain the principles of embodiments of the invention.
FIG. 1 is a schematic diagram of an electric heat trace (EHT) control system according to some embodiments.
FIG. 2 is a graph of temperature over time illustrating decision thresholds included in the EHT control system of FIG. 1.
FIG. 3 is a schematic diagram of an example data transfer scheme of an EHT control system.
FIG. 4 is a schematic diagram of another EHT control system according to some embodiments.
FIG. 5 is a schematic diagram of an example data transfer scheme, according to some embodiments, of the EHT control system of FIG. 1.
FIG. 6 is a flow chart of an example operation of an EHT control system according to some embodiments.
FIG. 7 is a flow chart of another example operation of an EHT control system according to some embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

The discussion herein is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Heat trace systems may include heating elements, e.g., heat trace cables, to control the temperature of a surface, such as a pipe surface to control the temperature or flow of fluid being transported therein. Each heating element along with its associated components can be known as an electric heating trace (EHT) circuit. Furthermore, each EHT circuit may have a dedicated controller (an "EHT controller") for controlling and/or monitoring the EHT circuit. Example EHT controllers may be adapted for, for example, flow maintenance, frost prevention, hot water temperature maintenance, process temperature maintenance, deicing, anti-icing, or other applications. Generally, each EHT controller may be configured to receive and monitor data related to, for example, surface temperature, fluid flow, fluid temperature, heating element current, and other pertinent information related to the EHT circuit and control the heating element accordingly.

A user can configure the EHT controller with a desired configuration, including desired alarm values, data requests, on/off temperature thresholds, etc. For example, the EHT controller may be configured to supply the user with collected sensor data at a first preset frequency during normal operation or at a second present frequency (e.g., higher than the first frequency) during an alarm event. Such data can be communicated to the user via a monitoring system server connected to the EHT controller. Conventional monitoring systems, however, can struggle to support proper data harvesting, as the EHT controllers are configured to send data to the user only infrequently or after an alarm condition occurs. The EHT controllers may also provide the data at relatively slow rates due to storage and bandwidth limitations of associated connection lines. Further, such conventional systems often fail to provide insight on events or status value trends (e.g., temperature, flow, or ground fault current) that can lead to failure in the EHT circuit.

Additionally, as many functionalities of conventional EHT controllers are provided by firmware within a limited computational environment, there is little ability to add new functionalities to already installed controllers. Many applications often include a plurality of EHT circuits, resulting in a plurality of EHT controllers within such systems, which may have the same or different functionality, including different firmware and hardware. Attempting to add new functionality to a plurality of EHT controllers in such a system may not be feasible based on the existing EHT controller architecture (e.g., for older controllers) or, if possible, is a time-consuming task that requires firmware updates specific to each type of EHT controller. Finally, adding such functionality may impede the EHT controller's core functionality and purpose.

Embodiments of the disclosed invention may address these and other issues, including by providing a gateway to regulate harvesting and managing of data from an EHT controller as well as adding additional functionality and control to the EHT controller. More specifically, embodiments provide a split in functionality of an EHT controller, "virtualizing" the state of the EHT controller in software outside of the physical controller, via the gateway, and directing management of the EHT controller to this virtual gateway instead of directly to the physical EHT controller. For example, the gateway may process harvested data to provide insight on trends of the corresponding EHT circuit and/or of a group of EHT circuits without affecting the original core functionality of the EHT controller. As will be described further below, utilizing a gateway or "virtual controller" can aid in the management and processing of the data provided by the EHT controllers. Furthermore, the usage of gateways may allow integration of advanced functionality, including new protocols, to existing or "legacy" controllers, including controllers of different models, years, and even brands to lengthen the life of already installed controllers and improve application outcomes.

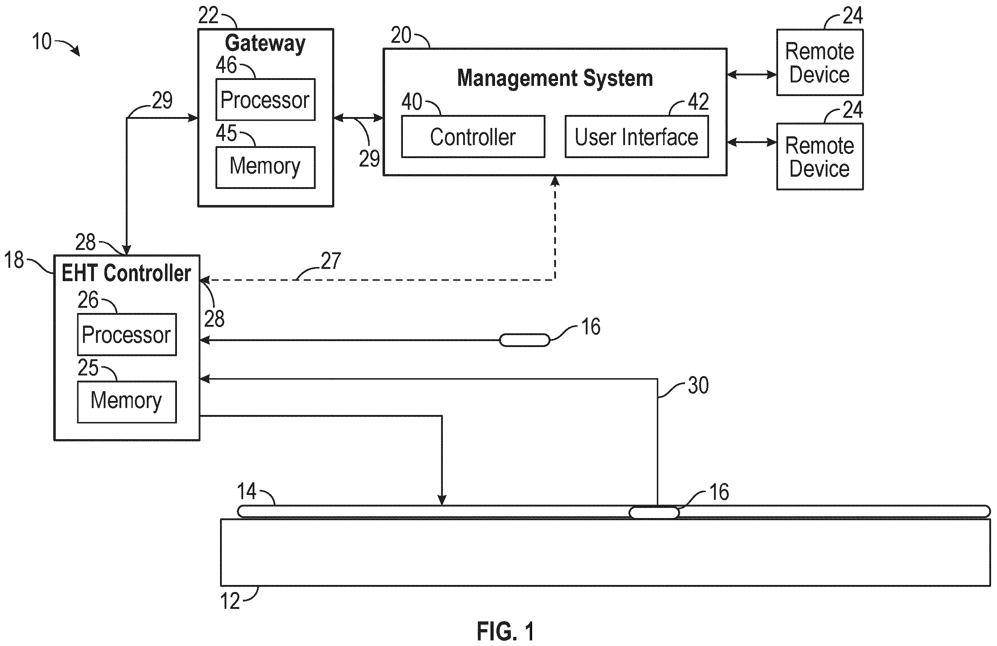

Accordingly, FIG. 1 illustrates an electric heat trace (EHT) control system 10 according to some embodiments of the invention. The EHT control system 10 can be used to heat a surface 12 and monitor the surface 12 and/or its surrounding environment. As such, the EHT control system 10 can include one or more heat trace cables 14, one or more sensors 16, and an EHT controller 18. Furthermore, the EHT controller 18 can communicate with a management system 20 via a gateway 22. The management system 20 may also be further connected to one or more remote devices 24 (e.g., including remote user interfaces).

Regarding the surface 12 in FIG. 1, the EHT control system 10 can be used to heat any type of surface in industrial, commercial, or residential applications via the heat trace cables 14. Example surfaces in industrial applications can include, but are not limited to: a pipe that requires freeze protection, such as water supply and drain lines, safety showers and eye washers, firefighting and sprinkler systems, and sewage and sanitary systems; a pipe that requires process temperature maintenance, such as in oil and gas, petrochemical, power, pharma, paper, and food and beverage industries; a pipeline that requires freeze protection, viscosity control, and/or temperature maintenance, such as for heavy oil or Sulphur transport between processing plants, storage tanks, and transportation facilities; foundations or concrete slabs that require frost heave prevention, such as those surfaces in liquified natural gas (LNG) terminals and on cryogenic and low temperature storage tanks; storage tanks that require heating, such as those that store sensitive industrial liquids, to prevent freezing or solidifying and facilitate smooth loading and unloading processes; and/or surfaces in offshore maritime environments, such for heated walkways and stairs, communications equipment; helidecks and lifeboats, etc. Example surfaces in commercial and residential applications can include, but are not limited to: a pipe that requires freeze protection, such as water supply and drain lines, safety showers and eye washers, firefighting and sprinkler systems; sewage and sanitary systems; floors and/or stairs to be heated; roofs and gutters that require deicing; and/or outdoor driveways, walkways, patios, emergency accesses that require surface snow melt, etc.

Referring back to FIG. 1, the heat trace cable 14 of some embodiments can be, for example, any type of heating cable for heating the surface 12. Example heat trace cables 14 include, but are not limited to, self-regulating heating cables, constant wattage heating cables, mineral insulated heating cables, polymer insulated heating cables, skin-effect heating cables, power-limiting heating cables, among others. In reference to pipe heating applications, the heat trace cable 14 can be adapted to heat the pipe surface 12 in order to heat fluid within the pipe. In reference to skin-effect heating cables systems, the heat trace cable 14 can be routed through an additional heat tube (not shown) to heat the surface 12. Additionally, the heat trace cable 14 can include a plurality of heat trace cables 14 in some applications, which can be coupled together, in series or parallel, so that the heat trace cables 14 may be energized or not energized in unison. For example, the heat trace cables 14 can be coupled to a power source (not shown) and power to the heat trace cables 14 from the power source can be controlled via the EHT controller 18. Furthermore, in some applications, the system 10 can incorporate additional components with the heat trace cables 14 to enable lengths of EHT circuits, such as, but not limited to, transformers, power connection boxes, pull boxes, splice boxes, and/or end termination boxes.

Referring still to FIG. 1, in some applications, the EHT control system 10 can utilize one or more sensors 16 to monitor a status of the system 10. For example, the system 10 can include one or more sensors 16 configured to sense surface temperature, fluid temperature, ambient temperature, flow through pipes (in pipe heating applications), current flow through the heat trace cables 14, voltage across the heat trace cables 14, among other variables. The sensors 16 may be wirelessly connected to the EHT controller 18 (e.g., using WiFi, Zigbee, Bluetooth^{®}, or another suitable wireless connection technology) or coupled to the EHT controller 18 using a wired connection (e.g., a three-wire connection or another connection). In some embodiments, a network of wireless sensors 16 may communicate with the EHT controller 18 using a mesh communication protocol.

According to one example, as illustrated in FIG. 1, a sensor 16 can be placed on an exterior of the surface 12 to sense surface temperature and another sensor 16 can be separate from the surface 12 (e.g., positioned in an area near the surface 12) to sense ambient air temperature. Such sensors 16 can include a resistance thermometer, resistance temperature detector, or other applicable sensors capable of detecting a temperature. In pipe heating applications, fluid temperature and flow may vary along a length of a pipe, or may vary between different pipes. In such cases, multiple sensors 16 can be used to monitor multiple temperatures at different locations along, in, or near the piping system. Alternatively, in such cases, the sensors 16 can include a distributed temperature sensing (DTS) system. For example, DTS systems may be fiber optic-based systems capable of generating spatio-temporal temperature data along a length of the surface 12.

In further examples, such as in pipe heating applications, sensors 16 can be configured to measure a flow of fluid within pipes of the piping system. For example, sensors 16 configured to monitor a flow of the fluid within the pipes can be utilized to alert users of low flow (e.g., a stoppage of flow) of fluid within the pipes. Such sensors 16 can be flow meters or other suitable devices that can measure one or more parameters related to fluid flow, such as flow rate or change of fluid temperature over time. In yet further examples, the system 10 may also include sensors 16 configured to measure other pertinent status values, such as ground fault current, voltage, etc. Any of these sensors 16 can be communicatively coupled to the EHT controller 18 to provide data to the EHT controller 18 for monitoring and EHT system management.

Referring back to FIG. 1, an EHT controller 18 can include a memory 25 configured to store data and EHT monitoring and/or control programs, and a processor 26 configured to execute such programs. For example, in some embodiments, an EHT controller 18 can be a programmable logic controller (PLC). The EHT controller 18 can also include a user interface (not shown) in some embodiments as well as one or more ports 28 for connection to, e.g., the management system 20 and/or the gateway 22. Generally, EHT controllers 18 can include a core independent function: monitoring variables such as temperature, current, voltage, flow, etc., controlling the EHT circuit, and generating alarms to alert a user of an alarm condition. Such functionality is generally implanted in firmware rather than software in order to allow the EHT controller 18 to maintain independence and minimize safety risks (e.g., from an outside source overriding alarm thresholds, etc.). Accordingly, EHT controllers 18, e.g., the corresponding processors 26 executing the management programs, can be configured to receive outputs from the one or more sensors 16, and can decide to perform one or more actions, such as energize heat trace cables 14, de-energize heat trace cables 14, or alert a user to a current or potential fault or malfunction of the system 10, based on the outputs from the sensors 16. These alerts can be communicated to the user via the management system 20, as further described below.

More specifically, looking to the example of FIG. 1, the EHT controller 18 can be coupled to the sensors 16 in order to receive status values (e.g., temperature values, flow status values, current values, voltage values, or other pertinent values) relating to temperature, current, voltage, fluid flow, or other pertinent variables. The EHT controller 18 may be configured to store the status values from the sensors 16 in the memory 25 and communicate the status values to the management system 20. The EHT controller 18 may be configured to provide the status values (e.g., one or more of the status values) to the management system 20 at a frequency, for example every 30 seconds, every minute, every 5 minutes, every 10 minutes, every twenty minutes, or every hour. This frequency may be a preset frequency stored in the memory 25 or may be dependent upon data queries from the management system 20 or the gateway 22, as further described below. Furthermore, this frequency may be dependent upon normal operation of the EHT controller 18 or when an alarm is flagged, as further described below.

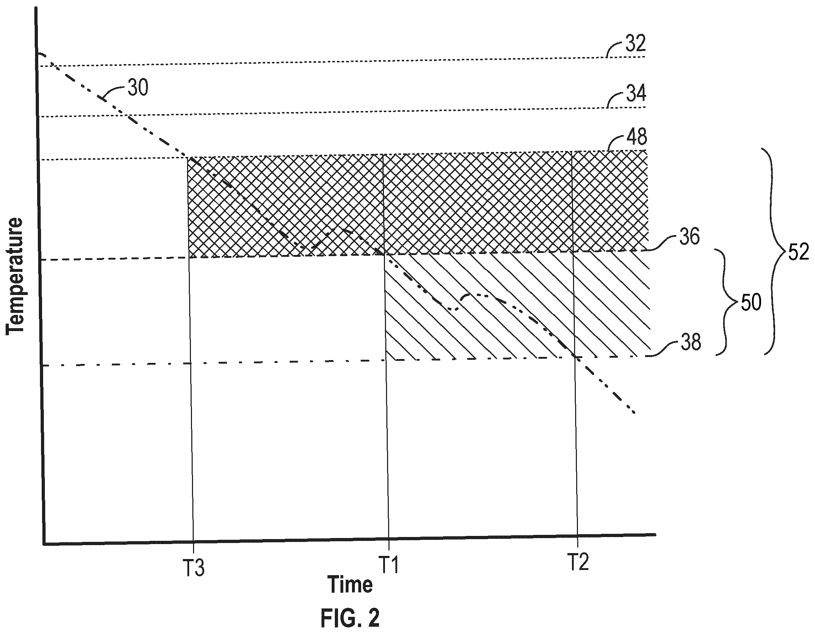

Furthermore, the EHT controller 18 can be configured to selectively energize and de-energize the heat trace cables 14 based on the status values. For example, FIG. 2 illustrates received status values 30 from a temperature sensor 16 over time. The EHT controller 18 may compare the status values 30 to a number of thresholds for heat trace cable management as well as alarm management. In this example of FIG. 2, a first threshold 32 and a second threshold 34 can be upper and lower temperature limits, respectively, for selectively energizing the heat trace cables 14. That is, the second threshold 34 can, for example, be a predetermined temperature value related to freezing or viscosity control of a fluid flowing through a pipe, such as a temperature that will maintain a target viscosity level of the fluid. In the case that the status value 30 drops below the second threshold 34, the EHT controller 18 can energize the heat trace cables 14 in order to heat the surface 12. In the case that the status value 30 rises above the first threshold 32, the EHT controller 18 can de-energize the heat trace cables 14 as no heating may be needed.

Additionally, the EHT controller 18 can be configured to alert a user of a potential fault or malfunction of the EHT control system 10. For example, an EHT controller 18 can issue an alert when certain alarm conditions exist such as, but not limited to, a sensed temperature of the surface 12 becoming too cold, a flow of the fluid within a pipe is too slow, or when a ground fault current along EHT circuit becomes too high. Looking again to the example in FIG. 2, the EHT controller 18 can compare the status value 30 to a third threshold 36 (e.g., a warning alarm threshold), that is different than the first and second thresholds 32, 34. For example, as the thresholds relate to temperature, the third threshold 36 may be lower than the first and second thresholds 32, 34. In the case the status value 30 drops below the third threshold 36 (as shown in FIG. 2 at T1), the EHT controller 18 can emit a warning alarm and/or communicate an alarm flag to the management system 20.

Furthermore, in some embodiments, when the status values 30 reach the third threshold 36, as illustrated in FIG. 2, the EHT controller 18 may be configured to provide the status values 30 to the management system 20 at a predetermined frequency. In some embodiments, this frequency may be a second frequency that is greater than the first frequency at which status values 30 are communicated to the management system 20 during normal operation. Alternatively, in some applications, the status values 30 are not sent to the management system 20 until the third threshold 36 is met (e.g., unless a separate data request query by the management system 20 is provided). Providing the status values 30 to the management system 20 at a different frequency after the alarm threshold is met may allow a user to more closely or rapidly monitor a status of a potentially malfunctioning component or fault within the system 10 without overburdening the system 10 during normal operation (e.g., due to bandwidth and/or memory limitations). This alarm period when the status values 30 are provided to the management system 20 at a set second frequency is illustrated as shaded area 50 in FIG. 2.

Furthermore, the EHT controller 18 can compare the status values 30 to a fourth threshold 38 (e.g., a trip alarm threshold), that is different than the first, second, and third thresholds 32, 34, 36. For example, as the thresholds relate to temperature, the fourth threshold 38 may be lower than the first, second, and third thresholds 32, 34, 36. In the case the status value 30 drops below the fourth threshold 38 (as shown in FIG. 2 at T2), the EHT controller 18 can emit an alarm, communicate an alarm flag to the management system 20, and/or shut off power to the heat trace cables 14.

As noted above, the EHT controller 18 can communicate status values and/or alarm flags to the management system 20. For example, referring back to FIG. 1, the management system 20 can be coupled to the EHT controller 18 via wired or wireless connections 27. Generally, the management system 20 can be coupled to a plurality of EHT controllers 18, receiving status values, alarms, etc. in one centralized place for a user to monitor and/or control the system 10. For example, while the EHT controllers 18 may be "in the field" generally near the surfaces 12 to be heated, the management system 20 may be a centralized system in a control facility away from the surfaces 12. For example, the management system 20 can be in a control facility that is "on-site" (e.g., within about one mile or less of the EHT controllers 18). In other examples, the management system 20 can be in a control facility that is "remote" (e.g., more than about one mile away from the EHT controllers 18).

Still referring to FIG. 1, the management system 20 can include a controller 40 (e.g., including memory and a processor) and a user interface 42 that displays information to a user and/or receives inputs from the user. The management system 20 can also be in communication (e.g., wirelessly or wired) with the remote devices 24, which may also include user interfaces, allowing a user to remotely view the information and/or provide inputs to the management system 20. Accordingly, information displayed to a user may be displayed at the management system 20 or at the remote device(s) 24 in communication with the management system 20 and control inputs provided to the management system 20 may be provided directly at the management system 20 (e.g., via user inputs such as a keyboard) or via the remote device(s) 24 in communication with the management system 20. Thus, the user interface 42 of the system 10 can be considered the user interface 42 of the management system 20 or of the remote device(s) 24.

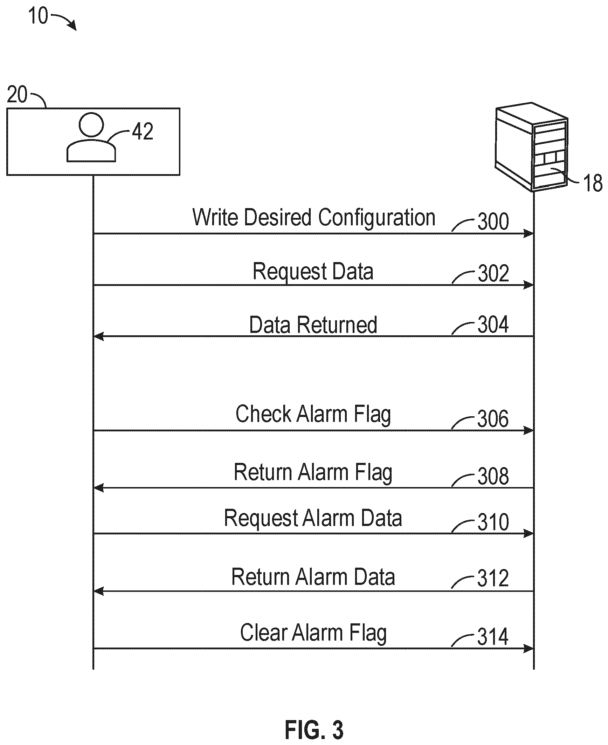

With respect to general communication between the EHT controller 18 and the management system 20, FIG. 3 illustrates an example operation and communication between the management system 20 and the EHT controller 18 in an EHT control system 10. As shown in FIG. 3, the management system 20 can write a desired configuration to the EHT controller 18 (via communication step 300), e.g., as provided by a user through the user interface 42, such as providing threshold values for alarm levels (e.g., the third and fourth thresholds 36, 38 described above), providing threshold values for heat trace cable function (e.g., the first and second thresholds 32, 34 described above), etc. The management system 20 can request data from the EHT controller 18 (via communication step 302) and the EHT controller 18 can communicate data to the management system 20 (via communication step 304) in response to the data request. The management system 20 can check for alarm flags (via communication step 306), request alarm data (via communication step 310), and clear alarm flags (via communication step 314), and the EHT controller 18 can correspondingly return alarm flags (via communication step 308) and return alarm data (via communication step 312) to the management system 20. The "alarm data" in this example can be the status values 30 and/or other data after an alarm is tripped. Accordingly, in the example of FIG. 3, the management system 20 is a central parent device that interrogates EHT controllers 18 periodically for information. Often, such communication is done via MODBUS protocols over wired connections, though such protocols over wireless connections or other protocols over wired or wireless connections are also contemplated.

According to some embodiments, referring back to FIG. 1, the EHT control system 10 can utilize a gateway 22 to regulate a stream of data between the EHT controllers 18 and the management system 20. As shown in FIG. 1, the gateway 22 can be coupled to the EHT controller 18 and the management system 20 via wired or wireless connections 29 so that the gateway 22 can regulate data transfer (e.g., transfer of the status values 30 and/or other data) from the EHT controller 18 to the management system 20. In some applications, while the management system 20 may be located in a control room of a plant, the gateway 22 may be located inside the plant closer to the EHT controller 18 (e.g., on the plant floor in a control panel).

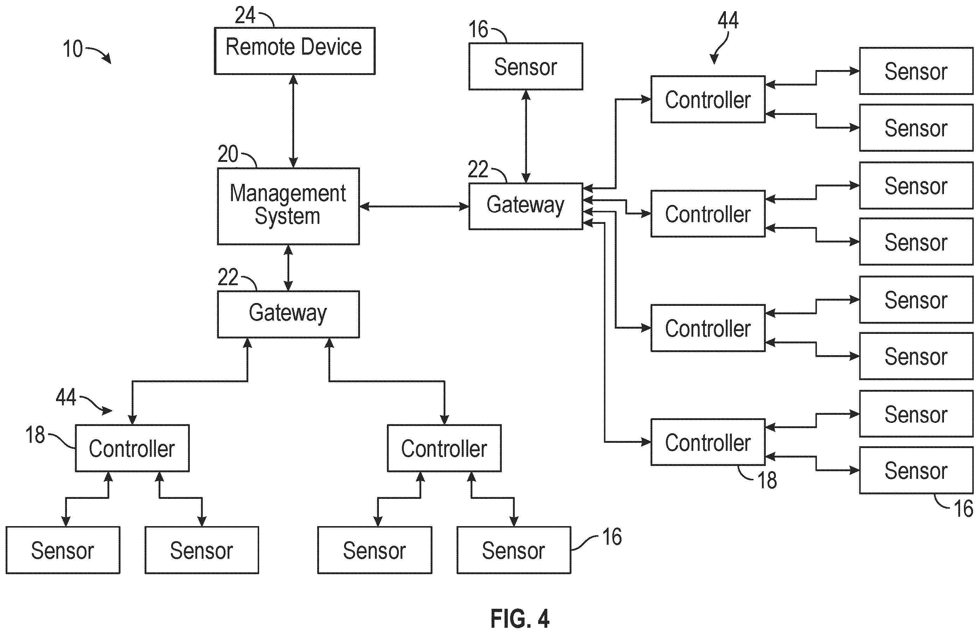

Furthermore, referring now to FIG. 4, in some applications, the EHT control system 10 can include a plurality of gateways 22 in communication with the management system 20, where each gateway 22 is in communication with a plurality of EHT controllers 18. Alternatively, in some embodiments, the system 10 may include a single gateway 22 managing a plurality of EHT controllers 18. The plurality of EHT controllers 18 connected to one gateway 22 may be considered a cluster 44. Additionally, in some embodiments, one or more sensors 16 may directly communicate with the gateway 22. For example, the gateway 22 can obtain sensor data directly from a sensor 16 in the field, or may obtain sensor data through other methods, such as wirelessly via the internet or from a weather service.

As will be described below, the gateway 22 may selectively store and process data from an EHT controller 18 and/or other sensor data prior to selectively transmitting the data to the management system 20. In this manner, the gateway 22 can allow the EHT controller 18 to provide additional insights ("virtual features") without affecting its core functionality. Adding a virtual representation of the management state of the EHT controllers 18 can enable advanced functionality for legacy EHT controllers without updating their firmware or losing the critical independent function of the devices.

More specifically, as noted above, generally, EHT controllers 18 are PLC devices with functionality that is provided by firmware within a limited computational environment. Current EHT controller firmware provides both the core control purpose of the device and the full management functionality of the device. This coupling restricts the ability to add new advanced functions to the EHT controllers 18. It also exposes differences between each family of products, increasing the burden to manage a diverse set of EHT controllers 18 within a system 10. By splitting the core functionality (implemented in the firmware of the EHT controller 18) from the management functionality (implemented remotely in software of the gateway 22), the ability to add new consistent functionality to existing legacy controllers 18 and new products in a system 10 can be easily achieved. This split in functionality can be described as "virtualizing" the state of the EHT controller 18 in software outside of the physical EHT controller 18 and directing all management of the EHT controllers 18 to this virtual gateway 22 instead of directly to the physical controller 18. The ability to add new functionality, including supporting new protocols, can lengthen the life of EHT controllers and improve industrial plant outcomes.

Accordingly, as shown in FIG. 1, in some embodiments, the gateway 22 may be operated by or implemented by a processor 46. For example, the processor 46 may include a central processing unit (CPU), a microcontroller, a microprocessor, a processing core, a field-programmable gate array (FPGA), or a similar device capable of executing instructions. The processor 46 may cooperate with memory 45, e.g., a non-transitory machine-readable medium to execute instructions, such as random-access memory (RAM), read-only memory (ROM), electrically erasable programmable read-only memory (EEPROM), flash memory, a storage drive, an optical disc, or similar. For example, the gateway 22 may be implemented as processer executable instructions, which may be stored on a non-transitory machine-readable medium. Additionally, in some embodiments, the gateway 22 may be implemented on a server or a separate hardware device.

Looking back to the example communication flow in FIG. 3, while memory and bandwidth limitations generally limit the amount of and frequency of data transfer from EHT controllers 18 to the management system 20, the intermediate gateways 22 can reduce these limitations and collect and manage much more data from the EHT controllers 18, providing additional functionality. As a result, from a user's viewpoint, the gateways 22 allow all EHT controllers 18 in the system 10 to have consistent, robust functionality regardless of their original features. In other words, the gateways 22 can provide "virtual controllers" that have the same functionality from a user's viewpoint regardless of the actual functionality and limitations of the physical EHT controller 18. The actual differences between EHT controllers 18 may be hidden from the user, though their core functionalities remain unchanged. However, this functionality can increase efficiency and reduce costs of system management, as more data can be analyzed near the EHT controllers 18 rather than having to be transmitted all the way to the management system 20 in a control room.

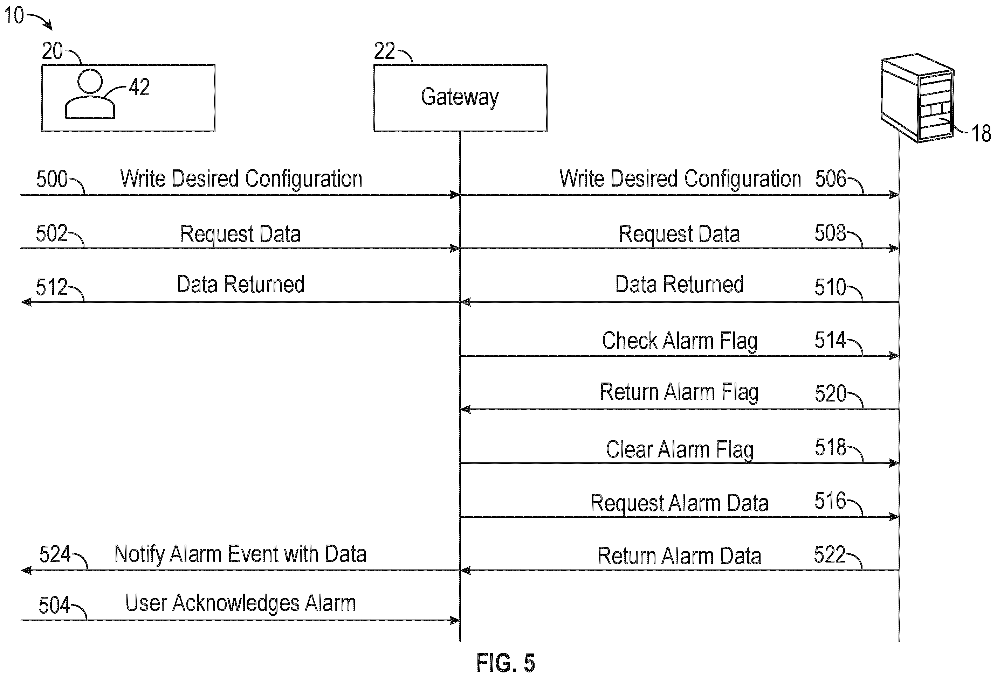

By way of example, FIG. 5 illustrates an example communication flow, according to some embodiments, between an EHT controller 18 and the management system 20 with an intermediate gateway 22 therebetween. From the user's point of view at the management system 20, very little is different than the example in FIG. 3. For example, at communication step 500, the management system 20 can write a desired configuration to the EHT controller 18, e.g., as provided by a user, such as providing threshold values for alarm levels (e.g., the third and fourth thresholds 36, 38 described above), providing threshold values for heat trace cable function (e.g., the first and second thresholds 32, 34 described above), etc., similar to communication step 300 of FIG. 3. The management system 20 can also request data from the EHT controller 18 (at communication step 502) and can acknowledge alarm flags (at communication step 504), similar to communication steps 302 and 314, respectively, of FIG. 3. However, communication between the management system 20 and the EHT controller 18 is conducted through the gateway 22. Therefore, upon receiving the desired configuration from the management system 20 through communication step 500, the gateway 22 can write a secondary configuration to the EHT controller 18 based on the desired configuration (communication step 506), request data from the EHT controller 18 (communication step 508), receive data from the EHT controller 18 in response to the request (communication step 510) and communicate data to the management system 20 in response to a data request from the management system 20 (communication step 512). The gateway 22 can further check for alarm flags (communication step 514), request alarm data (communication step 516), and clear alarm flags (communication step 518), and the EHT controller 18 can correspondingly return alarm flags (communication step 520) and return alarm data to the gateway 22 (communication step 522). The gateway 22 can correspondingly communicate the alarm and alarm data to and receive acknowledgement of the alarm from the management system 20 (communication steps 524, 504, respectively).

Accordingly, the usage of the gateway 22 may not substantially alter the transfer of the status values 30 to the management system 20 during normal operation (e.g., a first mode of operation) when the management system 20 queries the EHT controller 18 for data (e.g., when no alarm conditions exist). For example, during normal operation, the gateway 22 may be configured to relay the status values 30 from the EHT controller 18 to the management system 20 at a stored frequency and/or when queried by the management system 20.

Regarding alarms, as discussed above, EHT controllers 18 may have a warning alarm threshold (e.g. the third threshold value 36), triggering a second mode of operation in which data is output at a set frequency, and a trip alarm threshold (e.g., the fourth threshold value 38), triggering a third mode of operation in which power to the heat trace cables 14 is shut down. These thresholds can be set by a user via the management system 20, which then traditionally communicates the thresholds to the EHT controller 18. In such traditional systems, the management system 20 receives alarm flags when the thresholds are met to display such alarms to the user. In some embodiments, however, the management system 20 communicates these user-set alarm thresholds to the gateway 22, and the gateway 22 may set one or more alarm thresholds that are different from the user-set alarm thresholds provided by the gateway 22 or different from alarm thresholds associated with each of the EHT controllers 18 connected to the gateway 22 (e.g., alarm thresholds that are hardware programmed into the EHT controllers 18). In such examples, the gateway 22 may operate with a multi-threshold system in which the EHT controller 18 notifies the gateway 22 based on the altered thresholds set by the gateway 22 (or thresholds set by software/hardware of the EHT controller 18), while the management system 20 continues to receive notifications based on the user-set alarm thresholds provided to the gateway 22 by the management system 20.

In other words, the EHT controller 18 functionality is not altered in any way-there is still a set warning alarm and a set trip alarm. However, the gateway 22 can "hijack" the warning alarm value by setting it to a different threshold than what was input by the user, allowing the gateway 22 to receive status values 30 at the set frequency prior to when the user-set warning alarm threshold is met. Looking back to the example of FIG. 2, instead of using the third threshold value 36, corresponding to the user-input warning alarm threshold, once a status value 30 meets a fifth threshold value 48, corresponding to an altered warning alarm threshold, the EHT controller 18 may be configured to send an alarm flag and send the status values 30 to the gateway 22 at the set frequency. The gateway 22 may then store and process the status values 30 sent by the EHT controller 18. This altered alarm period when status values are provided from the EHT controller 18 at a set frequency is illustrated as shaded area 52 in FIG. 2. The gateway 22 can then monitor the status values 30 and, when the status values 30 reach the third threshold value 36, corresponding to the user-input warning alarm threshold, the gateway 22 can notify the management system 20 of a warning alarm flag.

The gateway 22 can utilize these altered thresholds to harvest and process data from connected EHT controllers 18 without alerting a user or burdening the management system 20. In other words, rather than the management system 20 generally querying the EHT controller 18 for data at set time periods, the gateway 22 can act as a smart filter by setting artificial alerts for when the EHT controller 18 will send data to the gateway 22 at an increased frequency. For example, the gateway 22 can be configured to receive, store, and process the status values 30, received from the EHT controller 18 at the set frequency, without alerting the management system 20 of an alarm, prior to the status values reaching the third threshold value 36 (i.e., the user-input warning threshold). While the user would not be notified of an alarm flag until the third threshold value 36 is met, the status values 30 collected and stored following the fifth threshold value 48 being met can be processed by the gateway 22 to discover trends in the status values 30 over time as the values approach the third threshold value 36.

In some configurations, the gateway 22 may analyze trends in the status values 30 to provide malfunction or failure predictions to the user via the management system 20 prior to user-input alarms being generated. For example, the gateway 22 may be able to analyze trends or rates of change in the status values 30 to predict when the status values 30 may fall below the fourth threshold value 38. That is, the gateway 22 can utilize trends in the collected data to predict that the status values 30 may fall below the third threshold value 36 or fourth threshold value 38 at a certain time (e.g., in the next 3 hours, 6 hours, 12 hours, or 24 hours). The gateway 22 can then be configured to alert the management system 20 of a potential impending warning alarm or trip alarm (or other alarm). Such additional insights could not be realized by the EHT controller 18 on its own. Providing advanced warning and other insights to the user, prior to a malfunction of EHT control system 10, may allow the user to perform preventative maintenance, potentially reducing down time, increasing efficiency, and ultimately saving money.

Furthermore, in some embodiments, rather than simply gathering data and reporting to the management system 20, due the additional data management functionalities using data gathered from multiple EHT controllers 18, the gateway 22 can provide additional control to the EHT controllers 18. For example, the gateway 22 can automatically clear alarm flags based on data from nearby EHT controllers 18. In other words, by crowd sourcing and analyzing status values 30 from nearby EHT controllers 18 and/or nearby sensors 16, a gateway 22 can "veto" a function or decision by an EHT controller 18. In one example, an EHT controller 18 may receive a high ambient temperature value from a sensor 16 and, in turn, turn off the heat trace cables 14. However, the gateway 22, by monitoring multiple nearby EHT controllers 18 in the cluster 44 that have ambient temperature values indicating that heat trace cables 14 should be energized, can override the EHT controller decision (e.g., automatically clear the alarm flag) so that the EHT controller reenergizes the heat trace cables 14. In another example, an EHT controller 18 in a cluster 44 may flag an arc fault to the gateway 22. While other EHT controllers 18 in the cluster may not yet see status values flagging the arc fault, the gateway 22 can observe trends in power data that indicate an arc fault in those circuits is also imminent and communicate such to the management system 20.

Generally, in some examples, the gateway 22 may possess significantly greater processing power and computational resources compared to the individual EHT controllers 18, which enables advanced data analysis and decision-making capabilities that would not be feasible at the controller level. For example, while EHT controllers 18 are typically designed with limited processing capabilities to maintain cost-effectiveness and reliability for their core heating control functions, the gateway 22 may be equipped with more powerful processors, larger memory capacity, and sophisticated algorithms that can handle complex data processing tasks across multiple controllers simultaneously.

This enhanced processing capability allows the gateway 22 to perform comprehensive cluster-wide analysis by comparing and correlating data received from multiple EHT controllers 18 within one of the clusters 44, or multiple controllers 18 within different clusters 44. For example, the gateway 22 may continuously monitor status values 30 from all connected EHT controllers 18 and identify patterns or anomalies that may not be apparent when viewing individual controller data in isolation.

In some examples, the gateway 22 can analyze spatial relationships between EHT controllers 18, considering factors such as physical proximity, shared environmental conditions, or common process lines to make more informed decisions about system health and performance. For example, the gateway 22 may implement proximity-based alerting mechanisms where alarm thresholds are dynamically adjusted based on the physical location and operational context of EHT controllers 18 within one of the clusters 44. For instance, if multiple EHT controllers 18 in close proximity (e.g., within 500 yards, within 1000 yards, or within 1/2 of a mile) begin showing similar trending patterns in their status values 30, the gateway 22 may alter the sensitivity of alarm thresholds for the EHT controllers 18 in that area, recognizing that the trend may be due to localized environmental conditions or may due to equipment failure that is not controlled by the EHT controllers 18 (e.g., a power source). In other examples, if an isolated EHT controller 18 shows anomalous behavior while nearby controllers remain stable, the gateway 22 may alter the sensitivity of alarm thresholds for that specific EHT controller, or may otherwise alter the monitoring of the specific EHT controller.

The gateway 22 may implement dynamic threshold adjustment mechanisms that automatically modify alarm thresholds based on real-time operational conditions and environmental factors. For example, as noted above, the gateway 22 may receive sensor data from outside sources, such as a weather service. As such, in some aspects, the gateway 22 may continuously or periodically monitor weather conditions and adjust temperature-related alarm thresholds accordingly. For example, during periods of extreme cold weather, the gateway 22 may alter the warning alarm thresholds for temperature sensors to provide earlier notification of potential heating system issues, recognizing that equipment failures during harsh weather conditions may have more severe consequences for process integrity and equipment protection.

In some examples, the gateway 22 may utilize multi-factor threshold algorithms that consider multiple variables simultaneously before triggering alerts to the management system 20. Rather than relying on single-parameter thresholds, the gateway 22 can implement complex decision trees that evaluate combinations of status values 30, environmental conditions, operational states, and/or temporal factors. For example, the gateway 22 may be configured to generate a warning flag if a status value 30 triggers a threshold and continues to trigger that threshold for a predetermined duration, such as 15 minutes, 30 minutes, 1 hour, or another suitable duration. In other examples, the gateway 22 may be configured to generate a warning alarm if a status value 30 triggers a threshold and continues to trigger that threshold during specific environmental conditions, such as when ambient temperature readings from nearby sensors 16 indicate certain weather conditions (e.g., extreme heat, cold, wind, humidity, precipitation, or other factors).

In some configurations, the gateway 22 may implement time-based validation mechanisms where potential alarm conditions must persist for a specified period before being escalated to the management system 20. This approach may help reduce false alarms caused by temporary fluctuations or transient conditions. For instance, the gateway 22 may require that a status value 30 meets a threshold for at least 15 seconds, or at least 1 minute, or at least 3 minutes, or at least 5 minutes, or another suitable duration, before generating an alarm to the management system 20, or may require multiple consecutive readings of the status value 30 meeting the threshold before triggering a warning.

In some examples, the gateway 22 may implement cascading threshold logic where different combinations of conditions trigger different response levels. The gateway 22 can evaluate multiple status values 30 from different sensors 16 and EHT controllers 18 to create a comprehensive assessment of system conditions before determining the appropriate response level.

In some configurations, the gateway 22 may create escalating urgency levels based on spatial relationships between malfunctioning EHT controllers 18 within a cluster 44. For example, when a single EHT controller 18 triggers an alarm flag, the gateway 22 may assign a standard priority level. However, if multiple EHT controllers 18 within close proximity (such as within 100 feet, 500 feet, or 1000 feet of each other) begin triggering similar alarm flags within a short time period, the gateway 22 may escalate the urgency level to indicate a potential systemic issue affecting multiple EHT controllers 18. This spatial correlation analysis may help identify problems with shared infrastructure, such as power distribution issues, environmental hazards, or installation defects that affect multiple EHT controllers in the same area.

The gateway 22 may also implement time-based urgency escalation mechanisms where alarm flags increase in priority the longer they remain unresolved. In some aspects, the gateway 22 may start with a low-priority classification when an alarm flag is first triggered, but may automatically escalate the urgency level if the alarm condition persists for predetermined time intervals. For instance, an alarm flag may begin as a low-priority alert, escalate to medium priority after remaining active for 2 hours, and further escalate to high priority after 8 hours of continuous activation. This time-based escalation may ensure that persistent issues are effectively communicated to the management system 20 to receive appropriate attention even if they initially appear minor.

In some configurations, the gateway 22 may incorporate weather data and environmental conditions into its urgency classification algorithms. The gateway 22 may access real-time weather information from external weather services or local weather stations to correlate alarm conditions with environmental factors. For example, during extreme cold weather events, the gateway 22 may automatically elevate the urgency level of temperature-related alarm flags, recognizing that heating system failures during such conditions pose greater risks to process integrity and equipment protection. Similarly, during periods of high humidity or precipitation, the gateway 22 may increase the priority of ground fault or electrical-related alarms due to increased risk of equipment damage or safety hazards.

The gateway 22 may also consider seasonal patterns and historical weather data when determining alarm urgency levels. In some aspects, the gateway 22 may maintain historical records (e.g., in memory 45) of how different types of alarms correlate with specific weather conditions or seasonal changes. This historical analysis may enable the gateway 22 to proactively adjust urgency levels, or threshold levels, based on forecasted weather conditions.

In some examples, the gateway 22 may implement process-criticality-based urgency classification where alarm flags are prioritized based on the importance of the affected process or equipment to overall facility operations. The gateway 22 may maintain a database of process criticality rankings (e.g., in memory 45) that consider factors such as production impact, safety implications, environmental consequences, and economic costs of equipment failure. Alarm flags affecting high-criticality processes may automatically receive elevated urgency levels, while alarms on non-critical or redundant systems may be assigned lower priority levels.

In some aspects, the gateway 22 may perform cross-system correlation analysis by integrating data from external sources beyond the EHT control system 10. The gateway 22 may interface with weather services, utility grid monitoring systems, or other facility management systems to correlate EHT performance with broader operational contexts. For instance, the gateway 22 may detect that certain EHT circuits consistently experience issues during specific weather patterns or utility power fluctuations, enabling proactive adjustments to alarm thresholds or maintenance schedules.

The gateway 22 may also implement anomaly detection algorithms that establish baseline behavioral profiles for individual EHT controllers 18 and clusters 44. These profiles may capture normal operational signatures including typical response times to temperature changes, power consumption patterns, and sensor reading variations. When an EHT controller 18, or a cluster 44, begins operating outside its established behavioral profile, even if within normal parameter ranges, the gateway 22 may flag this to the management system 20 as an early indicator of potential issues requiring attention.

The gateway 22 may implement predictive maintenance scheduling algorithms that consider multiple factors including equipment age, usage patterns, environmental stress factors, and historical failure modes. Rather than relying solely on fixed maintenance intervals, the gateway 22 may dynamically adjust maintenance recommendations based on actual operational conditions and performance trends. For example, EHT controllers 18 operating in harsh environmental conditions may receive more frequent maintenance recommendations, while controllers in stable environments may have extended maintenance intervals.

In some aspects, the gateway 22 may perform root cause analysis by correlating alarm patterns across multiple EHT controllers 18 and time periods to identify underlying systemic issues. When multiple controllers experience similar problems within a specific timeframe or geographic area, the gateway 22 may analyze common factors such as shared power sources, environmental conditions, or maintenance activities to identify potential root causes that may not be apparent when examining individual controller alarms in isolation.

The gateway 22 may also perform sensor validation and calibration monitoring by cross-referencing readings from multiple sensors 16 in similar environments to detect sensor drift, calibration issues, or sensor failures. When sensor readings from one location consistently deviate from nearby sensors under similar conditions, the gateway 22 may flag potential sensor issues and recommend calibration or replacement before the sensor failure impacts system performance.

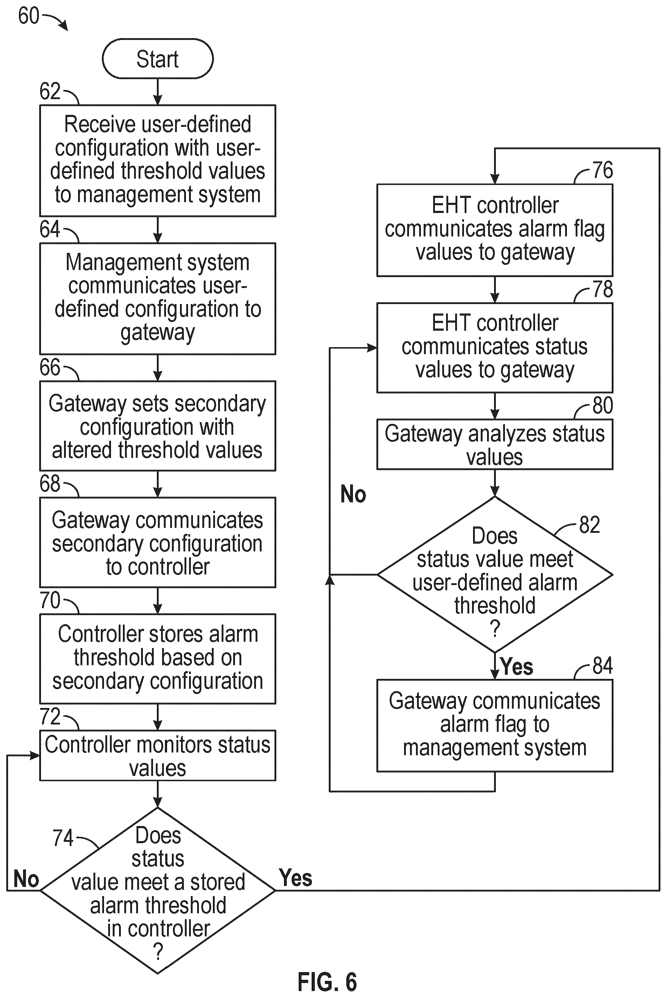

In light of the above, FIG. 6 illustrates an example method 60 for operating an EHT control system 10 according to some embodiments. That is, FIG. 6 shows a process including steps 62-84, in which some or all of steps 62-84 can be stored as computer readable instructions on a memory to be carried out by a processor of a device, such as the EHT controller 18, the gateway 22, or the management system 20, or on a combination of the EHT controller 18, the gateway 22, and the management system 20.

As shown in FIG. 6, at step 62, the management system 20 may receive, from a user, a user-defined configuration with user-defined threshold values. Such user-defined threshold values can include, but are not limited to, the first, second, third, and fourth thresholds 32, 34, 36, 38 described above. At step 64, the management system 20 communicates the user-defined configuration to the gateway 22. At step 66, the gateway 22 sets a secondary configuration including user-defined threshold values and/or altered threshold values. At step 68, the gateway 22 communicates the secondary configuration to the EHT controller 18. For example, the gateway 22 provides the user-defined threshold values and/or the altered threshold values of the secondary configuration to the EHT controller 18 and, at step 70, the EHT controller 18 stores such threshold values in its memory 25.

At step 72, the EHT controller 18 then operates by monitoring status values and comparing the status values to the stored threshold values. At step 74, the EHT controller 18 determines whether a status value meets a stored alarm threshold value. If the status value does not meet a stored alarm threshold value, the EHT controller 18 continues to monitor status values at step 72. If the status value meets a stored alarm threshold value, the EHT controller 18 communicates an alarm flag to the gateway 22 at step 76. Furthermore, at step 78, the EHT controller 18 communicates status values to the gateway 22 at a set frequency.

At step 80, the gateway 22 analyzes the status values received by the EHT controller 18. At step 82, the gateway 22 determines whether a status value meets a user-defined alarm threshold, e.g., from the user-defined configuration received at step 62. If the status value does not meet a user-defined alarm threshold, the method reverts back to step 78 and the gateway 22 continues to receive and analyze the status values (i.e., at step 78 and step 80). If, at step 82, the status value meets a user-defined alarm threshold, the gateway 22 communicates an alarm flag to the management system 20 at step 84.

According to this method 60 of some embodiments, the gateway 22 can allow the system 10 to automatically tune when to and how frequently to collect data from the EHT controller 18 without overburdening communication lines to the management system 20. In some applications, such functionality may reduce the need for the management system 20 to periodically query the EHT controller 18 for data. In other words, the gateway 22 may allow for the management system 20 to only collect data when EHT controllers 18 are not working properly or are trending toward not working properly. As such, the gateway 22 can use existing features of the EHT controller 18 to know when to "pay attention" and collect additional data for the user. For example, the EHT controller 18 can provide a dynamic flight recorder-type function to collect and analyze data when the EHT control system 10 is operating unusually but not yet unusual enough to alarm the user. This can allow a user to focus on EHT controllers 18 within the system 10 that are having issues without the management system 20 being overburdened by additional data. Furthermore, this method 60 does not alter the functionality of the EHT controller 18 or require firmware updates the EHT controller 18, nor does it alter when user-defined alarm flags are communicated to the user, but can still provide additional features to the user.

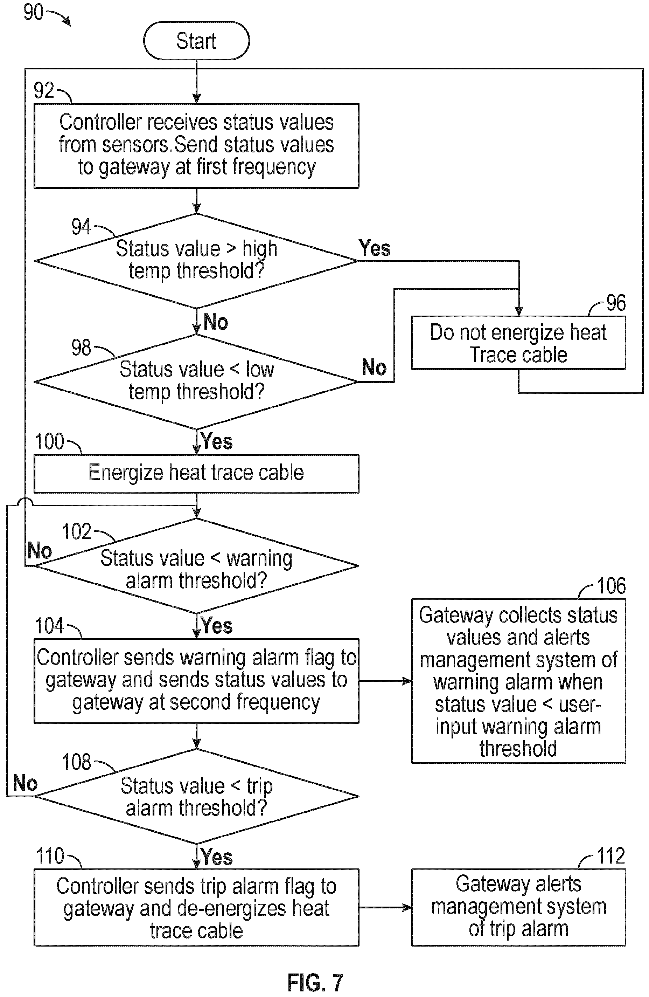

FIG. 7 illustrates another example method 90 for operating an EHT control system 10, according to some embodiments, in a freeze protection application. That is, FIG. 7 shows a process including steps 92-112, in which some or all of steps 92-112 can be stored as computer readable instructions on a memory to be carried out by a processor of a device, such as the EHT controller 18 or the gateway 22, or on a combination of the EHT controller 18 and the gateway 22.

As shown in FIG. 7, at step 92, the EHT controller 18 can receive status values from one or more of the sensors 16. The EHT controller 18 can convey the status values to the gateway 22 at a first frequency. In some applications, the first frequency may be zero such that the EHT controller 18 does not supply status values to the gateway 22 unless specifically queried for data. In other applications, the first frequency may be greater than zero.

At step 94, the EHT controller 18 can determine if a status value is above a stored high temperature threshold (e.g., the first threshold 32 in FIG. 2). If the EHT controller 18 determines that the status value meets the high temperature threshold (i.e., "YES" at step 94), the EHT controller 18 does not energize, or de-energizes, the heat trace cable 14 at step 96 and returns to step 92. If the EHT controller 18 determines that the status value is below the first threshold (i.e., "NO" at step 94), the EHT controller 18 can proceed to step 98.

At step 98, the EHT controller 18 can determine if a status value is below a stored low temperature threshold (e.g., the second threshold 34 in FIG. 2). If the EHT controller 18 determines that the status value is not below the low temperature threshold (i.e., "NO" at step 98), the EHT controller 18 does not energize, or de-energizes, the heat trace cable 14 at step 96 and returns to step 92. If the EHT controller 18 determines that the status value is below the low temperature threshold (i.e., "YES" at step 98), the EHT controller 18 energizes the heat trace cable 14 at step 100.

At step 102, the EHT controller 18 can determine if a status value is below a stored warning alarm threshold (e.g., the fifth threshold value 48 in FIG. 2). If the EHT controller 18 determines that the status value is not below the warning alarm threshold (i.e., "NO" at step 102), the EHT controller 18 returns to step 92. If the EHT controller 18 determines that the status value is below the warning alarm threshold (i.e., "YES" at step 102), the EHT controller 18 communicates a warning alarm flag to the gateway 22 and sends the status values to the gateway 22 at a second frequency, greater than the first frequency, at step 104.

Following step 104, at step 106, the gateway 22 receives the status values from the EHT controller 18 for data analysis and management. As discussed above, the stored warning alarm threshold on the EHT controller 18 can be an altered threshold different than a user-input warning alarm threshold to the management system 20 (e.g., the third threshold value 36 in FIG. 2). The gateway 22 can monitor the status values and send a warning alarm flag to the management system 20 only when the status values reach the user-input warning alarm threshold. Otherwise, the gateway 22 does not alert the management system 20 of a warning alarm flag but, instead, collects and analyzes the status values at the second frequency.

Additionally, following step 104, at step 108, the EHT controller 18 can determine if a status value is below a stored trip alarm threshold (e.g., the fourth threshold value 38 in FIG. 2). If the EHT controller 18 determines that the status value is not below the trip alarm threshold (i.e., "NO" at step 108), the EHT controller 18 returns to step 102. If the EHT controller 18 determines that the status value is below the trip alarm threshold (i.e., "YES" at step 108), the EHT controller 18 communicates a trip alarm flag to the gateway 22 and de-energizes the heat trace cable 14. Furthermore, at step 112, the gateway 22 can alert the management system 20 of a trip alarm flag.

Though the method 90 is described above as being related to temperature thresholds and values, in some applications, the method 90 can apply to other variables, such as flow, ground fault currents, or others. Additionally, while the methods 60, 90 of FIGS. 6 and 7 are illustrated and described as having steps in a particular order, in some applications, steps may be performed in a different order than what is shown or described, or the methods 60, 90 may contain more or fewer steps.

As used herein, the phraseology and terminology used is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings, and may also include fluid and electrical connections.

Also as used herein, the use of "including," "comprising," or "having" and variations thereof is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

Also as used herein, unless otherwise limited or defined, "substantially identical" indicates that features or components are manufactured using the same processes according to the same design and the same specifications. In some cases, substantially identical features can be geometrically congruent.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, of a method of otherwise implementing such capabilities, of a method of manufacturing relevant components of such a device or system (or the device or system as a whole), and of a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Features which are described in the context of separate embodiments may also be provided in combination in a single embodiment. Features which are, for brevity, described in the context of a single embodiment, may also be provided separately or in any suitable sub-combination, or combined as new embodiments. The applicant hereby gives notice that new claims may be formulated to one or more features and/or combinations of such features during the prosecution of the present application or of any further application derived therefrom. Features of the control system and/or gateway described may be incorporated into/used in corresponding methods and vice versa.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. An electric heat trace (EHT) control system for heating a surface, the EHT control system comprising:
a heat trace cable to heat the surface;
a sensor that outputs a status value;
an EHT controller in communication with the heat trace cable and the sensor, the EHT controller to:
receive the status value from the sensor,
compare the status value to a first threshold;
output the status value and a first alarm flag when the status value meets the first threshold;
a gateway in communication with the EHT controller to:
receive the output status value and the first alarm flag when output from the EHT controller;
compare the status value to a second threshold; and
communicate a second alarm flag to a management system in communication with the gateway when the status value meets the second threshold.

2. The EHT control system of claim 1, wherein the EHT controller further selectively energizes the heat trace cable based on the status value.

3. The EHT control system of claim 1 or claim 2, further comprising the management system, wherein the management system comprises a user interface to receive the second alarm flag.

4. The EHT control system of claim 1, claim 2 or claim 3, wherein the gateway is in communication with the management system to receive a command to alter the first or second threshold.

5. The EHT control system of claim 1 or of any of claims 2 to 4, wherein the first threshold is different from the second threshold, and wherein the gateway stores the status value when the status value is between the first threshold and the second threshold; and/or
wherein the gateway stores the status value to analyze trends in the status value over time to predict when the status value will meet the second threshold.

6. The EHT control system of claim 1 or of any of claims 2 to 5, wherein the gateway receives and analyzes status values from a plurality of EHT controllers; and, optionally,
wherein the gateway deactivates the first alarm flag based on the status values from the plurality of EHT controllers.

7. The EHT control system of claim 1 or of any of claims 2 to 6, wherein the sensor is configured to sense at least one of surface temperature, ambient temperature, fluid temperature, fluid flow, or ground fault current; and/or
wherein the EHT controller outputs the status value at a first frequency during a first mode of operation and at a second frequency during a second mode of operation when the status value meets the first threshold, the second frequency being greater than the first frequency.

8. A gateway for an electric heat trace (EHT) control system, comprising:
a processor; and
a memory storing instructions that, when executed by the processor, cause the gateway to:
set a first threshold;
receive status values from an EHT controller;
receive a first alarm flag from the EHT controller when the status values meet a second threshold set by the EHT controller;
compare the status values to the first threshold; and
output a second alarm flag to a management system when the status values meet the first threshold.

9. The gateway for the EHT control system of claim 8, wherein the instructions further cause the gateway to receive a command from a management system to alter the first or second threshold.

10. The gateway for the EHT control system of claim 8 or claim 9, wherein the instructions further cause the gateway to receive status values from a plurality of EHT controllers, and to receive alarm flags from the plurality of EHT controllers.

11. The gateway for the EHT control system of claim 8, claim 9 or claim 10, wherein the first threshold is different from the second threshold, and wherein the gateway stores the status values when the status values are between the first threshold and the second threshold.

12. The gateway for the EHT control system of claim 8 or of any of claims 9 to 11, wherein the status value includes one or more of: a surface temperature of a surface, an ambient temperature, a fluid temperature, a fluid flow, or a ground fault current; and/or
wherein the gateway receives the status values at a first frequency during a first mode of operation and at a second frequency during a second mode of operation when the status values meets the first threshold.

13. A method of operating an electric heat trace (EHT) control system for heating a surface, comprising:
receiving, at an EHT controller, a status value from a sensor;
comparing, using the EHT controller, the status value to a first threshold;
outputting, using the EHT controller, the status value and a first alarm flag to a gateway when the status value meets the first threshold;
receiving, at the gateway, the output status value and the first alarm flag from the EHT controller;
comparing, by the gateway, the output status value to a second threshold; and
selectively communicating, by the gateway, a second alarm flag to a management system when the status value meets the second threshold.

14. The method of claim 13, further comprising receiving, at the gateway, a command from the management system to alter the first or second threshold.

15. The method of claim 13 or claim 14, further comprising receiving, at the gateway, a plurality of status values from a plurality of EHT controllers; and/or
further comprising storing the status value when the status value is between the first threshold and the second threshold.
